# EUROPÄISCHE PATENTSCHRIFT

(11) **EP 3 464 188 B1**
(45) Veröffentlichungstag und Bekanntmachung des Hinweises auf die Patenterteilung: **27.10.2021**
(21) Anmeldenummer: 17725979.3
(22) Anmeldetag: 29.05.2017
(51) Int. Cl.: C02F 1/04, C02F 3/30, B61D 35/00, C02F 1/66, C02F 1/16, C02F 1/52, C02F 1/467, C02F 1/32, C02F 101/16, C02F 1/02

(54) **VERFAHREN UND VORRICHTUNG ZUR BEHANDLUNG VON SANITÄRABWASSER IN ZÜGEN**
METHOD AND DEVICE FOR TREATING SANITARY WASTEWATER IN TRAINS
PROCÉDÉ ET DISPOSITIF POUR TRAITER DES EAUX USÉES DE SANITAIRES À BORD DES TRAINS

(30) Priorität: 02.06.2016 DE 102016110191; 19.08.2016 DE 102016115393
(43) Veröffentlichungstag der Anmeldung: 10.04.2019
(73) Patentinhaber: AKW A+V Protec Holding GmbH, 92242 Hirschau (DE)
(72) Erfinder: SIESS, Daniel, 92421 Schwandorf (DE); SCHÄRTL, Josef, 92253 Schnaittenbach (DE)
(74) Vertreter: Kruspig, Volkmar
(86) Internationale Anmeldenummer: PCT/EP2017/062903
(87) Internationale Veröffentlichungsnummer: WO 2017/207494

(56) Entgegenhaltungen:
- EP-A1- 0 551 079
- WO-A1-02/102637
- DE-A1- 10 152 751
- DE-C1- 4 332 762
- US-A1- 2013 167 293

## Beschreibung

Die Erfindung betrifft ein Verfahren zur Behandlung von Sanitärabwasser in Zügen gemäß Patentanspruch 1. Des Weiteren betrifft die Erfindung eine Vorrichtung zur Behandlung von Sanitärabwasser in Zügen, umfassend einen Bioreaktor, in dem das Sanitärabwasser eines Zuges zumindest teilweise reinigbar ist, gemäß Patentanspruch 7.

Die Abwässer aus Toiletten und Waschbecken in Zügen werden meist durch eine Behandlung in einem Bioreaktor gereinigt und geklärt. Beispielhaft wird auf den Bioreaktor der DE 43 32 762 C1 verwiesen. Organische Bestandteile des Abwassers werden mit Hilfe eines derartigen Bioreaktors weitgehend abgebaut. Anorganische Bestandteile wie z.B. Kupfer- und Chloridionen verbleiben im Abwasser. Das Abwasser wird nach derzeitigem Stand der Technik nach einer Hygienisierung auf das Gleisbett abgelassen. Durch die Verwendung von Stahlkarosserien in Zügen ist das Inkontaktkommen mit den im Abwasser enthaltenen Salzen nicht nachteilig. Bei einer derartigen Variante von Zügen treten keine nennenswerten Probleme durch Korrosion auf.

Allerdings werden nunmehr immer mehr Zugbestandteile aus Aluminiumlegierungen gefertigt. Im Abwasser enthaltene Salze wirken auf derartige Aluminiumlegierungen korrosiv und können zu erheblichen Schäden führen. Eine Beschichtung der Aluminiumkarosserie eines Zuges bewirkt keine befriedigende Lösung des Problems, da die Beschichtung beispielsweise durch Steinschläge beschädigt werden kann und durch einen entsprechend entstandenen Riss in der Beschichtung an dieser Stelle ein intensiver Kontakt der korrosiven Flüssigkeit mit der Karosserie ermöglicht wird.

DE 101 52 751 A1 betrifft ein Verfahren zur Aufbereitung von Biofiltraten durch Ansäuerung des Biofiltrates. Insbesondere werden eine Vorrichtung sowie ein Verfahren zur Behandlung von Rückständen aus Biogasanlagen offenbart.

In EP 0 551 079 A1 wird hingegen ein Kanalisationssystem für einen Reisezugwagen beschrieben.

Aus dem Vorgenannten ist es daher Aufgabe der vorliegenden Erfindung, ein weiterentwickeltes Verfahren zur Behandlung von Sanitärabwasser in Zügen anzugeben, das hinsichtlich der Verwendung von Aluminiumkarosserien bei Zügen weiterentwickelt ist.

Des Weiteren soll eine Vorrichtung zur Behandlung von Sanitärabwasser in Zügen angegeben werden, wobei mit der weiterentwickelten Vorrichtung insbesondere ein erfindungsgemäßes Verfahren durchgeführt werden soll.

Die Lösung der Aufgabe der Erfindung erfolgt durch ein Verfahren zur Behandlung von Sanitärabwasser in Zügen gemäß der Lehre nach Patentanspruch 1. Des Weiteren erfolgt die Lösung der Aufgabe der Erfindung durch eine Vorrichtung zur Behandlung von Sanitärabwasser in Zügen umfassend einen Bioreaktor, in dem das Sanitärabwasser eines Zuges zumindest teilweise reinigbar ist, gemäß der Lehre nach Patentanspruch 7.

Die Unteransprüche stellen mindestens zweckmäßige Ausgestaltungen und Weiterbildungen des erfindungsgemäßen Verfahrens oder der erfindungsgemäßen Vorrichtung dar.

Das erfindungsgemäße Verfahren ist durch folgende Verfahrensschritte gekennzeichnet:
a) Reinigen des Sanitärabwassers in Zügen, in einem Bioreaktor,
b) Zuführen des im Bioreaktor zumindest teilweise gereinigten Abwassers in eine Konditionierungsanlage,
c) zumindest teilweise Phasentrennung des teilweise gereinigten Abwassers in der Konditionierungsanlage,
d) Gewinnen eines Flüssiganteils und eines Festanteils des zumindest teilweise gereinigten Abwassers.

Die erfindungsgemäßen Verfahrensschritte werden in der angegebenen Reihenfolge a) bis d) durchgeführt. Es ist möglich, dass zwischen den Verfahrensschritten a) bis d) weitere Verfahrensschritte durchgeführt werden. Insbesondere ist es möglich, dass mehrere Verfahrensschritte zeitlich parallel zueinander durchgeführt werden.

Gemäß dem erfindungsgemäßen Verfahren werden das Sanitärabwasser eines Zuges in einem Bioreaktor gereinigt oder vorgereinigt. Bezüglich der Reinigung in einem Bioreaktor wird vollkommen Bezug auf den Offenbarungsgehalt der DE 43 32 762 C1 genommen. Der Bioreaktor kann, wie dort angegeben, aus mindestens drei Kompartimenten bestehen. Demnach ist es möglich, dass das zu reinigende Abwasser im Bioreaktor folgenden Verfahrensschritten unterzogen wird:
- Abtrennen des Feststoffanteils und Abbau des Feststoffanteils in einem ersten Kompartiment unter vorwiegend aeroben Bedinungen,
- Weiterleiten des flüssigen Anteils in ein zweites Kompartiment, in dem ein Abbau unter vorwiegend anoxischen Bedingungen erfolgt, und
- Weiterleiten des flüssigen Anteils aus dem zweiten Kompartiment in ein drittes Kompartiment, in dem ein Abbau unter aeroben Bedingungen erfolgt.

Des Weiteren ist es möglich, dass der Bioreaktor lediglich zwei Kompartimente umfasst, so dass das erfindungsgemäße Verfahren im Bioreaktor lediglich zwei Teilschritte umfasst. Hier ist es möglich, dass das zu reinigende Abwasser zunächst in eine Feststoffkammer geleitet wird. In dieser Feststoffkammer erfolgt eine erste Reinigung, wobei das Abwasser anschließend in eine Flüssigkammer geführt wird. In einer derartigen Flüssigkammer kann das grob vorgereinigte Abwasser zunächst zwischengelagert werden, bevor das zumindest teilweise gereinigte Abwasser einer Konditionierungsanlage zugeführt wird.

In der Konditionierungsanlage kann das teilweise gereinigte Abwasser zumindest teilweise hinsichtlich der Phasen getrennt werden. Vorzugsweise erfolgt eine Phasentrennung hinsichtlich der Flüssigphase und der Festphase.

Die Konditionierungsanlage umfasst einen Vakuumverdampfer, so dass im Schritt c) ein Aufkonzentrieren des teilweise gereinigten Abwassers erfolgt.

Nach der Phasentrennung bzw. dem Aufkonzentrieren des teilweise gereinigten Abwassers können der Flüssiganteil und der Festanteil des zumindest teilweise gereinigten Abwassers gewonnen werden. Da die Konditionierungsanlage einen Vakuumverdampfer umfasst, kann im Schritt d) ein Destillat und ein Konzentrat des zumindest teilweise gereinigten Abwassers gewonnen werden.

Das nach der Behandlung aus dem Bioreaktor ablaufende Abwasser, nämlich das zumindest teilweise gereinigte Abwasser, weist beispielsweise anorganische Salze und geringe Mengen Organik auf.

Die Konditionierungsanlage umfasst neben einem Vakuumverdampfer vorzugsweise des Weiteren einen Vakuumkreislauf und/oder einen Kälte-/Wärmekreislauf und/oder einen Konzentratkreislauf.

Der Vakuumverdampfer wird vorzugsweise bei einer Temperatur von 25 °C bis 35 °C betrieben. Mit anderen Worten wird das zumindest teilweise gereinigte Wasser in einem Vakuumverdampfer eingebracht und dort bei einer Temperatur von 25 °C bis 35 °, aufkonzentriert.

Im Vakuumverdampfer kann ein Vakuum von 4 - 12 kPa, insbesondere von 4 - 6 kPa, eingestellt werden. Mit anderen Worten wird im Vakuumverdampfer ein Vakuum von 4 - 12 kPa bzw. 40 - 120 mbar Restdruck, insbesondere von 4 - 6 kPa bzw. 40 - 60 mbar Restdruck, angewandt. Aufgrund des Vakuums bzw. des eingestellten Restdruckes kann der Siedepunkt des teilweise gereinigten Abwassers reduziert werden.

Dem Sanitärabwasser in Zügen und/oder dem teilweise gereinigten Abwasser kann organische Säure und/oder Mineralsäure zugemischt werden. Mit anderen Worten kann dem Sanitärabwasser in Zügen vor dem Eintritt und/oder während des Eintritts in den Bioreaktor organische Säure und/oder Mineralsäure zugemischt werden.

In einer weiteren Ausführungsform der Erfindung ist es möglich, dass die organische Säure und/oder die Mineralsäure dem Gemisch im Bioreaktor zugefügt wird.

In wiederum einer weiteren Ausführungsform der Erfindung ist es möglich, dass dem aus dem Bioreaktor ausgetretenen, zumindest teilweise gereinigten Abwasser organische Säure und/oder Mineralsäure zugemischt wird.

Wiederum ist es möglich, dass dem zumindest teilweise gereinigten Abwasser in der Konditionierungsanlage, insbesondere im Vakuumverdampfer, organische Säure und/oder Mineralsäure zugemischt wird.

Bei der organischen Säure handelt es sich vorzugsweise um Zitronensäure und/oder Oxalsäure. Bei der Mineralsäure kann es sich beispielsweise um Schwefelsäure handeln. Die Zugabe von geringen Mengen von organischen Säuren und/oder Mineralsäuren bewirkt eine Reduzierung des pH-Wertes des zumindest teilweise gereinigten Abwassers. Somit wird das Ausgasen von Ammoniak beim Destillationsprozess vermindert bzw. weitestgehend verhindert.

Es ist möglich, dass der pH-Wert des organisch belasteten Abwassers und/oder des organisch belasteten Nassmülls, insbesondere des Sanitärabwassers in Zügen, und/oder der pH-Wert des zumindest teilweise gereinigten Abwassers überwacht und durch Zugabe von Säure auf einen pH-Wert < 5, insbesondere auf einen pH-Wert von 4,5, eingestellt wird.

Insbesondere ist es möglich, dass der pH-Wert des zumindest teilweise gereinigten Abwassers in der Konditionierungsanlage, insbesondere im Vakuumverdampfer, überwacht und durch Zugabe von Säure eingestellt wird. Auch hierbei wird der pH-Wert des zumindest teilweise gereinigten Abwassers auf einen pH-Wert < 5, insbesondere auf einen pH-Wert von 4,5, eingestellt.

Bei der Säure kann es sich insbesondere um die bereits angegebene organische Säure und/oder Mineralsäure handeln. Die organische Säure ist insbesondere eine Zitronensäure und/oder eine Oxalsäure. Bei der Mineralsäure kann es sich beispielsweise um Schwefelsäure handeln. Durch den Zusatz bzw. durch die Zugabe von Säure wird der pH-Wert des Abwassers, insbesondere des teilweise gereinigten Abwassers, in den sauren Bereich verschoben. Dadurch ist es möglich, ein nahezu ammoniakfreies Destillat zu erhalten.

Sofern das zumindest teilweise gereinigte Abwasser Ammoniak enthält, werden in der Gasphase im Vakuumverdampfer sowohl Ammoniakgas als auch Wasserdampf vorliegen. Beim anschließenden Kondensieren würde in Wasser gelöstes Ammoniak vorliegen.

Durch eine beispielsweise Zugabe von Schwefelsäure in das, insbesondere teilweise gereinigte, Abwasser wird Ammoniak in Ammoniumsulfat umgewandelt:

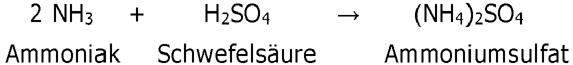

Bei Ammoniak handelt es sich um eine im Wesentlichen gasförmig vorliegende chemische Verbindung, da der Siedepunkt bei -33 °C liegt. Ammoniak ist in Wasser leicht löslich. Ammoniumsulfat ist hingegen ein im festen Aggregatzustand vorliegendes Salz. Der Schmelzpunkt vom Ammoniumsulfat liegt bei 235 °C.

Sofern der pH-Wert des zumindest teilweise gereinigten Abwassers auf beispielsweise 4,5 eingestellt wird, liegt vorzugsweise im zumindest teilweise gereinigten Abwasser kein Ammoniak sondern im Wasser gelöstes Ammoniumsulfat vor.

Die Gasphase im Verdampfer umfasst aufgrund dessen lediglich Wasserdampf und nicht mehr zusätzlich Ammoniakgas. Der vorliegende Wasserdampf kondensiert in einfaches Wasser.

Insgesamt kann somit ein deutlich gereinigtes Abwasser und eine sehr gute Destillatqualität erzielt werden. Die Destillation des zumindest teilweise gereinigten Abwassers führt zu einem farblosen Produkt mit reduziertem Gehalt an Kupfer und Chlorid. Aufgrund der Zugabe von Säuren ist außerdem der Ammoniumgehalt im Destillat sehr stark reduziert. Es kann ein nahezu ammoniakfreies Destillat zur Verfügung gestellt werden.

Dem Vakuumverdampfer wird Abwärme des Bioreaktors zugeführt und das teilweise gereinigte Abwasser wird mittels der Abwärme des Bioreaktors erwärmt. Mit anderen Worten wird die Wärmeentwicklung im Bioreaktor zum Vorwärmen des teilweise gereinigten Abwassers im Vakuumverdampfer genutzt. Dies ermöglicht einen energiesparenden Betrieb des Verdampfers.

In einer weiteren Ausführungsform der Erfindung ist es möglich, dass der Flüssiganteil des zumindest teilweise gereinigten Abwassers, insbesondere das Destillat, hygienisiert wird. Das Destillat wird nach dessen Gewinnung durch die Konditionierungsanlage, insbesondere durch einen Vakuumverdampfer, in einem Destillat-Behälter gelagert. Das Destillat kann anschließend hygienisiert werden. Eine Hygienisierung kann insbesondere durch UV-Bestrahlung und/oder Pasteurisierung und/oder anodische Oxidation erfolgen. Nach einer durchgeführten Hygienisierung kann das Destillat beispielsweise abgepumpt werden. Insbesondere ist es möglich, dass das Destillat nach einer Hygienisierung auf das Gleisbett abgelassen wird.

Des Weiteren ist es möglich, dass das Destillat, zu einer/der Zug-Toilette transportiert und als Spülflüssigkeit verwendet wird. Erfindungsgemäß ist es vorgesehen, dass das Destillat zu einer/der Zug-Sanitäranlage transportiert und dort als Brauchwasser, insbesondere als Spülflüssigkeit und/oder Waschflüssigkeit und/oder Reinigungsflüssigkeit, verwendet wird. Mit anderen Worten wirddas Destillat gesammelt und anschließend wieder dem Sanitärkreislauf eines Zuges zugeführt. Das Destillat kann aufgefangen, gesammelt, recycelt und wieder dem Sanitärabwasserkreislauf zugeführt werden.

Der Festanteil des zumindest teilweise gereinigten Abwassers, insbesondere das Konzentrat, kann beispielsweise über die Laufzeit eines Zuges im Serviceintervall gesammelt und bei einem nächsten Service abgelassen und entsorgt werden. Des Weiteren ist es möglich, dass ein Konzentrat-Behälter bzw. Konzentrat-Sammelbehälter vollständig austauschbar ist und regelmäßig gegen einen leeren Konzentrat-Behälter ausgetauscht wird.

Aufgrund der durchgeführten Vakuumverdampfung kann eine Verdampfung auf 1 % bis 40 %, insbesondere auf 5 % bis 40 %, insbesondere auf 7 % bis 30 %, insbesondere auf 10 % bis 20 %, des ursprünglichen Abwasservolumens, d.h. des Volumens des zumindest teilweise gereinigten Abwassers, erfolgen. Das zunächst korrosiv wirkende Abwasservolumen, nämlich das bereits teilweise gereinigte Abwasservolumen, kann erheblich reduziert werden. Die korrosive Wirkung wird abgeschwächt. Das hinsichtlich der korrosiven Wirkung abgeschwächte Destillat kann wie gewohnt, unter Umständen nach einer durchgeführten Hygienisierung, auf das Gleisbett abgelassen werden. Karosserieteile, die aus einer Aluminiumlegierung hergestellt sind, werden dabei nicht durch die Flüssigkeit beschädigt.

In einer Ausführungsform der Erfindung ist es möglich, dass das erfindungsgemäße Verfahren intervallmäßig durchgeführt wird. Diesbezüglich ist es insbesondere möglich, die Konditionierungsanlage, insbesondere den Verdampfer, insbesondere den Vakuumverdampfer, intervallmäßig zu betreiben. Hierzu wird das zumindest teilweise gereinigte Abwasser zunächst in einer Flüssigkammer des Bioreaktors gesammelt. Der Inhalt der Flüssigkammer wird nicht vollständig eingedampft. Vielmehr ist es möglich, dass bei jedem Betrieb der erfindungsgemäßen Vorrichtung, insbesondere der Konditionierungsanlage, insbesondere des Vakuumverdampfers, nur ein bestimmter Anteil des in der Flüssigkammer teilweise gereinigten Abwassers abdestilliert wird. Innerhalb von 90 Tagen fallen für eine Zugtoilette ca. 9.000 Liter Abwasser an. Im Idealfall, d.h. nach berechneter Löslichkeit der Salze, kann das Konzentrat von 90 Tagen im Verdampfer zurückgehalten werden. Vorzugsweise ergibt sich eine Reduzierung des ursprünglichen Abwasservolumens auf 1 %.

In einer weiteren Ausführungsform der Erfindung kann die zumindest teilweise Phasentrennung des teilweise gereinigten Abwassers im Schritt c) durch ein Fällungsverfahren erfolgen. Entsprechend nachgelagert kann der Schritt d), nämlich die Gewinnung eines Flüssiganteils und eines Festanteils des zumindest teilweise gereinigten Abwassers erfolgen.

Ein weiterer Aspekt der Erfindung betrifft eine Vorrichtung zur Behandlung von Sanitärabwasser in Zügen, umfassend einen Bioreaktor, in dem das organisch belastete Abwasser und/oder der organisch belastete Nassmüll, insbesondere das Sanitärabwasser eines Zuges, zumindest teilweise reinigbar ist.

Die Vorrichtung ist zur Durchführung des erfindungsgemäßen Verfahrens zur Behandlung von Sanitärabwasser in Zügen ausgebildet.
Erfindungsgemäß umfasst die Vorrichtung eine dem Bioreaktor nachgeschaltete Konditionierungsanlage, in der das zumindest teilweise gereinigte Abwasser zumindest teilweise hinsichtlich der Phasen trennbar ist. Vorzugsweise ist das Abwasser hinsichtlich der Flüssigphase und der Festphase trennbar.

Die Konditionierungsanlage umfasst einen Vakuumverdampfer. Es ist auch möglich, dass die Konditionierungsanlage ein Vakuumverdampfer ist. Der Vakuumverdampfer umfasst vorzugsweise zum einen eine Siedekammer und zum anderen eine Kondensatkammer. Durch die Siedekammer verlaufen vorzugsweise Heizserpentinen. Zur Beheizung bzw. Erwärmung des in der Siedekammer befindlichen, teilweise gereinigten Abwassers kann der Vakuumverdampfer außerdem einen Heizmantel umfassen.

In einer weiteren Ausführungsform der Erfindung kann die Konditionierungsanlage einen Destillat-Behälter umfassen, der mit einer Hygienisierungseinrichtung des Bioreaktors und/oder mit einem Vorratsbehälter einer Zug-Sanitäranlage verbunden ist. Bei dem Vorratsbehälter einer Zug-Sanitäranlage kann es sich beispielsweise um einen Spülflüssigkeitsbehälter einer Zug-Toilette handeln. Außerdem ist es möglich, dass es sich bei dem Vorratsbehälter um einen Brauchwasser-Vorratsbehälter eines Zug-Waschbeckens handelt.

Im Vakuumverdampfer kann/können eine Schaumfalle und/oder eine Dosiervorrichtung für Entschäumungsmittel ausgebildet sein. Die Schaumfalle ist insbesondere unterhalb einer Kondensatkammer ausgebildet.

Des Weiteren ist es möglich, dass die Vorrichtung zur Behandlung von organisch belastetem Abwasser eine pH-Wert-Überwachungseinheit umfasst. Insbesondere ist es vorgesehen, dass eine derartige pH-Wert-Überwachungseinheit von der Konditionierungsanlage umfasst wird. Alternativ ist es möglich, dass im Bioreaktor eine derartige pH-Wert-Überwachungseinheit ausgebildet ist.

In einer besonders bevorzugten Ausführungsform der Erfindung ist die pH-Wert-Überwachungseinheit im Vakuumverdampfer ausgebildet.

Außerdem weist die erfindungsgemäße Vorrichtung vorzugsweise eine Säure-Zugabe-Einheit auf. Diese kann in der Konditionierungsanlage, besonders bevorzugt im Vakuumverdampfer, ausgebildet sein. Alternativ oder zusätzlich ist es möglich, dass eine derartige Säure-Zugabe-Einheit im Bioreaktor ausgebildet ist.

Die Säure-Zugabe-Einheit empfängt vorzugsweise Daten der pH-Wert-Überwachungseinheit. Abhängig vom gemessenen pH-Wert des organisch belasteten Abwassers und/oder des organisch belasteten Nassmülls, insbesondere des zumindest teilweise gereinigten Abwassers, wird Säure zu dem organisch belasteten Abwasser und/oder dem organisch belasteten Nassmüll, insbesondere zu dem zumindest teilweise gereinigten Abwasser, hinzugegeben. Die Säure-Zugabe-Einheit fügt vorzugsweise eine derartige Menge von Säure zu, so dass ein pH-Wert von vorzugsweise < 5, insbesondere von 4,5, eingestellt wird.

In einer weiteren Ausführungsform kann der Verdampfer, insbesondere der Vakuumverdampfer, ein Kratzwerk aufweisen. Das Kratzwerk kann auch als Scraper bezeichnet werden. Ein derartiger Scraper bzw. ein derartiges Kratzwerk hat den Vorteil, dass etwaige im Inneren des Verdampfers, insbesondere im Inneren des Vakuumverdampfers, entstehende Anhaftungen abgeschabt und über einen Konzentrat-Austrag aus dem Verdampfer, insbesondere dem Vakuumverdampfer, gefördert werden können. Sofern der Verdampfer, insbesondere der Vakuumverdampfer, ein Kratzwerk aufweist, weist der Verdampfer, insbesondere der Vakuumverdampfer, vorzugsweise keine Heizserpentinen auf. In diesem Fall wird der Verdampfer, insbesondere der Vakuumverdampfer, über einen Heizmantel erwärmt.

Es ist möglich, dass die Konditionierungsanlage einen Vakuum-Verdampfer sowie einen Vakuumkreislauf und/oder einen Kälte-/Wärmekreislauf und/oder einen Konzentratkreislauf aufweist.

Der Vakuumkreislauf umfasst beispielsweise eine Venturidüse sowie eine Wasserstrahlpumpe. Außerdem kann im Vakuumkreislauf vorzugsweise der beschriebene Destillat-Behälter ausgebildet sein.

Der Kälte-/Wärmekreislauf umfasst vorzugsweise eine Kühlvorrichtung, insbesondere eine Luftkühlvorrichtung, und/oder einen Kältemittelkompressor.

Im Konzentratkreislauf, in dem vorzugsweise ein Konzentrat-Behälter ausgebildet ist, ist außerdem vorzugsweise eine Konzentratpumpe ausgebildet. Der Konzentrat-Behälter dient als Abfallbehälter, der in regelmäßigen Abständen entleert bzw. ausgewechselt werden kann.

Die erfindungsgemäße Vorrichtung umfasst zusammenfassend mindestens einen Bioreaktor und mindestens eine Konditionierungsanlage, wobei die Konditionierungsanlage einen Vakuumverdampfer umfasst.

Erfindungsgemäß weist die Vorrichtung, also die Anordnung aus mindestens einem Bioreaktor und mindestens einer Konditionierungsanlage, die mindestens einen Vakuumverdampfer umfasst, einen derartig kompakten Aufbau auf, dass diese in einem Zug integriert werden kann. Mit anderen Worten ist die erfindungsgemäße Vorrichtung durch einen kompakten Aufbau und die Integration in einen Zug gekennzeichnet.

Im Folgenden werden anhand schematischer Darstellungen erfindungsgemäße Vorrichtungen zur Behandlung von Sanitärabwasser in Zügen näher beschrieben.

Dabei zeigen:
- Fig. 1: einen prinzipellen Aufbau einer erfindungsgemäßen Vorrichtung; und
- Fig. 2: eine weitere Ausführungsform einer erfindungsgemäßen Vorrichtung mit einem weiterentwickelten Verdampfer.

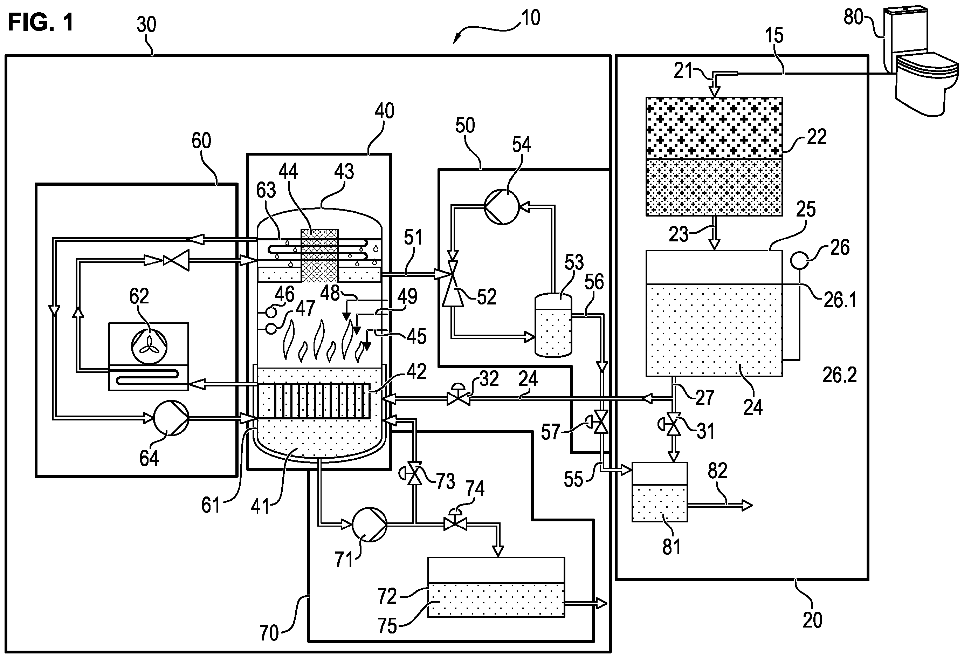

Die erfindungsgemäße Vorrichtung 10 zur Durchführung des erfindungsgemäßen Verfahrens zur Behandlung von organisch belastetem Abwasser und/oder organisch belastetem Nassmüll umfasst gemäß Fig. 1 prinzipiell zwei Anlagen bzw. Bauteile. Dabei handelt es sich um den Bioreaktor 20 sowie um die Konditionierungsanlage 30.

Dem Bioreaktor 20 wird durch den Zulauf 21 im vorliegenden Fall Sanitärabwasser 15, insbesondere Toilettenabwasser einer Zug-Toilette 80, zugeführt. Der Bioreaktor 20 umfasst eine Feststoffkammer 22. Mit Hilfe der Feststoffkammer 22 werden bereits grobe Verschmutzungen und die festeren Bestandteile des Toilettenabwassers gefiltert. Durch einen Ablauf 23 gelangt das teilweise gereinigte Abwasser 24 in die Flüssigkammer 25.

In der Flüssigkammer 25 ist ein Sensorsystem 26 ausgebildet. Bei einem Flüssigkeitsstand, der durch den oberen Sensor 26.1 detektiert wird, wird der Vakuumverdampfer 40 der Konditionierungsanlage 30 eingeschaltet. Sofern die Flüssigkammer 25 lediglich bis zum Sensor 26.2 gefüllt ist, wird der Vakuumverdampfer 40 ausgeschaltet. Über den Ablauf 27 gelangt das teilweise gereinigte Abwasser 24 in den Vakuumverdampfer 40.

Der Vakuumverdampfer 40 weist eine Kesselform auf, wobei im unteren Teil des Kessels eine Siedekammer 41 ausgebildet ist. In dieser Siedekammer 41 verlaufen Heizserpentinen 42. Ebenfalls zu erkennen ist ein Heizmantel 61, der zum Kälte-/Wärmekreislauf 60 zugehörig ausgebildet ist.

Die Konditionierungsanlage 30 umfasst neben dem Vakuumverdampfer 40 einen Vakuumkreislauf 50, einen Kälte-/Wärmekreislauf 60 sowie einen Konzentratkreislauf 70.

Der Vakuumverdampfer 40 wird vorzugsweise bei einer Temperatur von 20 °C bis 100 °C, insbesondere bei einer Temperatur von 25 °C bis 35 °C, betrieben. Die Einstellung der Temperatur erfolgt mittels des Kälte-/Wärmekreislaufes 60. Der Kälte-/Wärmekreislauf 60 umfasst neben dem Heizmantel 61 eine Luftkühlungsvorrichtung 62 sowie innerhalb des Vakuumverdampfers 40 verlaufende Kühlschlangen 63. Im Kälte-/Wärmekreislauf 60 ist des Weiteren ein Kältemittelkompressor 64 ausgebildet. Im Kälte-/Wärmekreislauf 60 ist somit ein von dem teilweise gereinigten Abwasser 24 separierte Flüssigkeit befindet.

Im Vakuumverdampfer 40 ist neben einer Kondensatkammer 43 eine Schaumfalle 44 ausgebildet. Des Weiteren ist im Vakuumverdampfer 40 eine Dosiervorrichtung 45 zur Zudosierung von Entschäumungsmittel ausgebildet.

Des Weiteren befinden sich im Kessel des Vakuumverdampfers 40 zahlreiche Sensoren. Dabei handelt es sich beispielsweise um einen Drucksensor 46 und einen Schaumsensor 47. Des Weiteren ist es möglich, dass ein Temperatursensor ausgebildet ist.

Des Weiteren ist vorzugsweise eine Druckluftzufuhr 48 sowie eine HochdruckDüse 49 im Vakuumverdampfer 40 ausgebildet. Mit Hilfe des Vakuumverdampfers 40 wird das zumindest teilweise gereinigte Abwasser 24 in ein Destillat und ein Konzentrat aufgetrennt. Das zumindest teilweise gereinigte Abwasser 24 weist anorganische Salze und geringe Mengen Organik auf. Beispielsweise kann das Abwasser 24 Kupfer- und Chloridionen aufweisen. In dem Vakuumverdampfer 40 herrscht während des Reinigungsvorganges vorzugsweise ein Vakuum von 4 - 12 kPa, insbesondere von 4 - 6 kPa.

Zur Einstellung des Vakuums ist der Vakuumkreislauf 50 ausgebildet. Das in der Kondensatkammer 43 gebildete Kondensat strömt in den Vakuumkreislauf 50. Hierzu ist ein Ablauf 51 ausgebildet. Im Vakuumkreislauf 50 ist außerdem eine Venturidüse 52, ein Destillat-/Vakuumbehälter 53 sowie eine Wasserstrahlpumpe 54 ausgebildet. Das Kondensat/Destillat wird in den Behälter 53 gesammelt. Mit Hilfe des Ventils 57 ist es möglich, den Zulauf des Destillats 55 in die Hygienisierungseinrichtung 81 durch den Ablauf 56 des Vakuumkreislaufes 50 zu steuern.

Nachfolgend kann das Destillat 55 in eine Hygienisierungseinrichtung 81 transportiert werden. Dies erfolgt über den Ablauf 56. Bei der Hygienisierungseinrichtung 81 kann es sich um eine Vorrichtung zur UV-Bestrahlung, eine Pasteurisierungs-Vorrichtung oder um eine Vorrichtung zur anodischen Oxidation handeln.

Ausgehend von der Hygienisierungseinrichtung 81 kann das hygienisierte Destillat 82 in Richtung der Zug-Toilette 80 transportiert werden. Das hygienisierte Destillat 82 kann als Spülflüssigkeit der Zug-Toilette 80 dienen. Ebenfalls ist es möglich, dass das hygienisierte Destillat 82 auf das Gleisbett abgelassen wird.

Das Destillat 55 ist hinsichtlich der Salze gereinigt. Das Destillat enthält somit keine Kupfer- und Chloridionen. Das Destillat 55 wirkt nicht korrosiv hinsichtlich einer Aluminiumkarrosserie des Zuges. Das Destillat 55 kann somit ohne die Hygienisierungseinrichtung 81 durchlaufen zu müssen, auf das Gleisbett abgepumpt werden. Das Destillat 55 kann mit der Aluminiumkarrosserie in Kontakt kommen, ohne dass es zu Korrosionen kommen kann.

Der ebenfalls dargestellte Konzentratkreislauf 70 umfasst eine Konzentratpumpe 71 sowie den Konzentrat-Behälter 72. In Abhängigkeit der Ventilstellungen der Ventile 73 und 74 kann die Konzentratpumpe 71 ein Umwälzen des Konzentrats im Bereich der Siedekammer 41 des Vakuumverdampfers 40 hervorrufen. Sofern das Ventil 74 geöffnet ist und das Ventil 73 geschlossen, wird das Konzentrat mit Hilfe der Konzentratpumpe 71 in den Konzentrat-Behälter 72 gepumpt. Das Konzentrat 75 wird über die Laufzeit des Zugs im Serviceintervall gesammelt und beim nächsten Service abgelassen oder entsorgt. Des Weiteren ist es möglich, den vollständigen Konzentrat-Behälter 72 mit dem darin befindlichen Konzentrat 75 zu wechseln.

Mit Hilfe der Ventile 31 und 32 ist die erfindungsgemäße Vorrichtung 10 derart steuerbar, dass das teilweise gereinigte Abwasser 24 nicht zwangsläufig in der Konditionierungsanlage 30 gereinigt werden muss. Sofern das Ventil 31 geöffnet ist und das Ventil 32 geschlossen, kann das teilweise gereinigte Abwasser 24 beispielsweise bei einem lediglich geringen Verschmutzungsgrad, direkt in die Hygienisierungseinrichtung 81 geleitet werden.

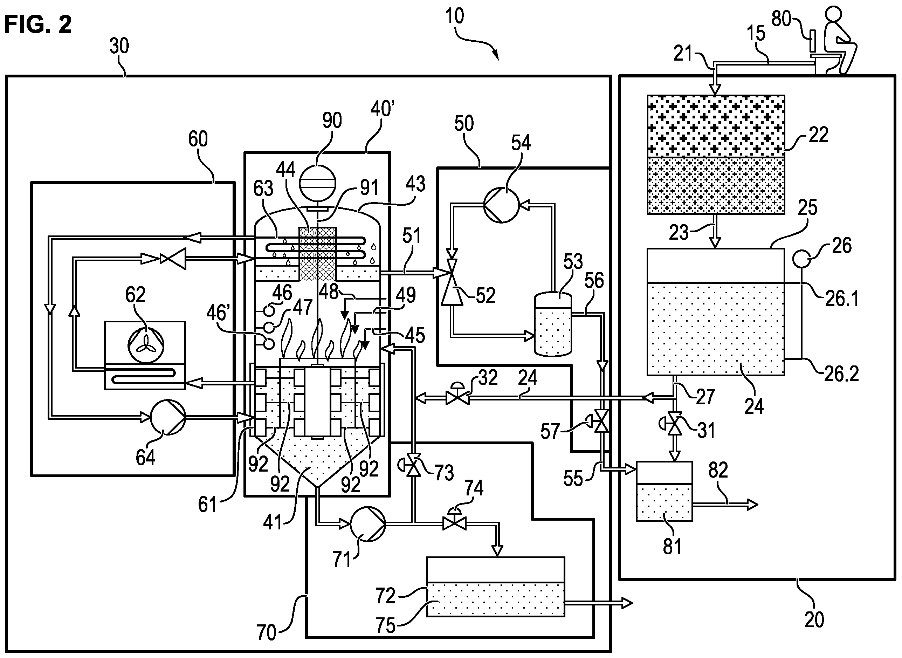

In Fig. 2 wird eine weitere Vorrichtung 10 zur Durchführung des erfindungsgemäßen Verfahrens zur Behandlung von organisch belastetem Abwasser und/oder organisch belastetem Nassmüll dargestellt. Diese Vorrichtung 10 umfasst wie bereits in Fig. 1 dargestellt, prinzipiell zwei Anlagen bzw. Bauteile. Dabei handelt es sich ebenfalls um den Bioreaktor 20 sowie um die Konditionierungsanlage 30. Lediglich der Vakuumverdampfer 40' weist in der in Fig. 2 dargestellten Ausführungsform andere bauliche Merkmale auf als der in Fig. 1 dargestellte Vakuumverdampfer 40.

Zunächst ist festzustellen, dass der Vakuumverdampfer 40' im Vakuumverdampfer 40' neben einem Kondensat 43 eine Schaumfalle 44 ausgebildet ist. Des Weiteren ist im Vakuumverdampfer 40' eine Dosiervorrichtung 45 zur Dosierung von Entschäumungsmittel ausgebildet.

Des Weiteren befinden sich im Kessel des Vakuumverdampfers 40' zahlreiche Sensoren. Dabei handelt es sich beispielsweise um einen Drucksensor 46 und um einen Schaumsensor 47. Des Weiteren ist ein Füllstandsensor 46' ausgebildet. Des Weiteren wäre es möglich, dass ein Temperatursensor ausgebildet ist. Der Füllstandsensor 46' könnte auch in dem Vakuumverdampfer 40 der Fig. 1 ausgebildet sein.

Der Vakuumverdampfer 40' weist außerdem ein Kratzwerk 90 auf. Das Kratzwerk 90 besteht aus einer Stange 91, an der sich die einzelnen Kratzarme 92 befinden. Ein derartiges Kratzwerk bzw. ein derartiges Scraper-System hat den Vorteil, dass etwaige im Inneren des Vakuumverdampfers 40' entstehende Anhaftungen abgeschabt und über die Konzentratpumpe 71 in den Konzentrat-Behälter 72 befördert werden können.

Aufgrund der Ausbildung von Kratzarmen 92 können im Vakuumverdampfer 40' keine Heizserpentinen ausgebildet werden. Der Vakuumverdampfer 40' wird lediglich über den Heizmantel 61 erwärmt.

Bezüglich der weiteren Elemente der in Fig. 2 dargestellten Vorrichtung 10 wird auf die Erläuterungen der Fig. 1 verwiesen.

### Bezugszeichenliste

- 10: Vorrichtung
- 15: Sanitärabwasser
- 20: Bioreaktor
- 21: Zulauf
- 22: Feststoffkammer
- 23: Ablauf
- 24: Teilweise gereinigtes Abwasser
- 25: Flüssigkammer
- 26: Sensorsystem
- 26.1, 26.2: Sensor
- 27: Ablauf
- 30: Konditionierungsanlage
- 31: Ventil
- 32: Ventil
- 40, 40': Vakuumverdampfer
- 41: Siedekammer
- 42: Heizserpentine
- 43: Kondensatkammer
- 44: Schaumfalle
- 45: Dosiervorrichtung
- 46: Drucksensor
- 46': Füllstandsensor
- 47: Schaumsensor
- 48: Druckluftzufuhr
- 49: HD-Düse
- 50: Vakuumkreislauf
- 51: Ablauf
- 52: Venturidüse
- 53: Destillat-/Vakuumbehälter
- 54: Wasserstrahlpumpe
- 55: Destillat
- 56: Ablauf
- 57: Ventil
- 60: Kälte-/Wärmekreislauf
- 61: Heizmantel
- 62: Luftkühlungsvorrichtung
- 63: Kühlschlangen
- 64: Kältemittel-Kompressor
- 70: Konzentratkreislauf
- 71: Konzentratpumpe
- 72: Konzentrat-Behälter
- 73: Ventil
- 74: Ventil
- 75: Konzentrat
- 80: Zug-Toilette
- 81: Hygienisierungseinrichtung
- 82: Hygienisiertes Destillat
- 90: Kratzwerk
- 91: Stange
- 92: Kratzarm

## Patentansprüche

1. Verfahren zur Behandlung von Sanitärabwasser (15) in Zügen, **gekennzeichnet durch**
a) Reinigen des Sanitärabwassers (15) in einem Bioreaktor (20),
b) Zuführen des im Bioreaktor (20) zumindest teilweise gereinigten Abwassers (24) in eine Konditionierungsanlage (30),
c) zumindest teilweise Phasentrennung des teilweise gereinigten Abwassers (24) in der Konditionierungsanlage (30),
d) Gewinnen eines Flüssiganteils und eines Festanteils des zumindest teilweise gereinigten Abwassers (24)
wobei die Konditionierungsanlage einen Vakuumverdampfer (40) umfasst und im Schritt c) ein Aufkonzentrieren des teilweise gereinigten Abwassers (24) erfolgt und der Vakuumverdampfer (40) bei einer Temperatur von 25 °C - 35 °C betrieben wird, wobei dem Vakuumverdampfer (40), Abwärme des Bioreaktors (20) zugeführt wird und das teilweise gereinigte Abwasser (24) mittels der Abwärme des Bioreaktors (20) erwärmt wird, wobei im Schritt d) ein Destillat (55) und ein Konzentrat (75) des zumindest teilweise gereinigten Abwassers (24) gewonnen wird
und das Destillat (55) zu einer Zug-Sanitäranlage transportiert und als Brauchwasser, insbesondere als Spülflüssigkeit, verwendet wird.

2. Verfahren nach einem der vorangegangenen Ansprüche,
**dadurch gekennzeichnet, dass**
im Vakuumverdampfer (40), ein Vakuum von 4 - 12 kPa eingestellt wird.

3. Verfahren nach einem der vorangegangenen Ansprüche,
**dadurch gekennzeichnet, dass**
dem Sanitärabwasser (15) in Zügen und/oder dem teilweise gereinigten Abwasser (24) organische Säure, insbesondere Zitronensäure und/oder Oxalsäure, und/oder Mineralsäure, insbesondere Schwefelsäure, zugemischt wird.

4. Verfahren nach einem der vorangegangenen Ansprüche,
**dadurch gekennzeichnet, dass**
der pH-Wert des zumindest teilweise gereinigten Abwassers (24) überwacht und durch Zugabe von Säure auf einen pH-Wert < 5, insbesondere auf eine pH-Wert von 4,5, eingestellt wird.

5. Verfahren nach Anspruch 4,
**dadurch gekennzeichnet, dass**
der pH-Wert des zumindest teilweise gereinigten Abwassers (24) im Vakuumverdampfer (40, 40') überwacht und durch Zugabe von Säure eingestellt wird.

6. Verfahren nach einem der vorangegangenen Ansprüche,
**dadurch gekennzeichnet, dass**
das Destillat (55), insbesondere durch UV-Bestrahlung und/oder Pasteurisierung und/oder anodische Oxidation, hygienisiert wird.

7. Vorrichtung (10) zur Behandlung von Sanitärabwasser (15) in Zügen gemäß einem Verfahren nach einem der Ansprüche 1 bis 6, umfassend einen Bioreaktor (20), in dem das Sanitärabwasser (15) eines Zuges zumindest teilweise reinigbar ist,
**gekennzeichnet durch**
eine dem Bioreaktor (20) nachgeschaltete Konditionierungsanlage (30), in der das zumindest teilweise gereinigte Abwasser (24) zumindest teilweise hinsichtlich der Phasen trennbar ist, wobei
die Konditionierungsanlage (30) einen Vakuumverdampfer (40, 40') umfasst, wobei die Vorrichtung einen kompakten Aufbau aufweist und in einen Zug integriert ist.

8. Vorrichtung (10) nach Anspruch 7,
**dadurch gekennzeichnet, dass**
die Konditionierungsanlage (30) einen Destillat-Behälter (53) umfasst, der mit einer Hygienisierungseinrichtung (81) des Bioreaktors (20) und/oder mit einem Vorratsbehälter einer Zug-Sanitäranlage verbunden ist.

9. Vorrichtung (10) nach Anspruch 7 oder 8,
**dadurch gekennzeichnet, dass**
im Vakuumverdampfer (40, 40') eine Schaumfalle (44) und/oder eine Dosiervorrichtung (45) für Entschäumungsmittel ausgebildet ist.

10. Vorrichtung (10) nach einem der Ansprüche 7 bis 9,
**dadurch gekennzeichnet, dass**
der Vakuumverdampfer (40') ein Kratzwerk (90) aufweist.

11. Vorrichtung nach einem der Ansprüche 7 bis 10,
**dadurch gekennzeichnet, dass**
der Vakuumverdampfer (40, 40') eine pH-Wert-Überwachungseinheit und eine Säure-Zugabe-Einheit umfasst.

## Claims

1. A method for treating sanitary wastewater (15) in trains,
**characterized by**
a) purifying the sanitary wastewater (15) in a bioreactor (20),
b) feeding the wastewater (24) at least partially purified in the bioreactor (20) into a conditioning installation (30),
c) at least partially separating phases of the partially purified wastewater (24) in the conditioning installation (30),
d) obtaining a liquid portion and a solid portion of the at least partially purified wastewater (24),
wherein the conditioning installation comprises a vacuum evaporator (40), and in step c), a concentration of the partially purified wastewater (24) is performed and the vacuum evaporator (40) is operated at a temperature of 25°C to 35°C, wherein exhaust heat of the bioreactor is fed to the vacuum evaporator (40), and the partially purified wastewater (24) is heated by means of the exhaust heat of the bioreactor (20), wherein in step d), a distillate (55) and a concentrate (75) of the at least partially purified wastewater (24) are obtained,
and the distillate (55) is conveyed to a train sanitary installation and is used as service water, in particular as rinsing liquid.

2. The method according to any one of the preceding claims,
**characterized in that**
a vacuum of 4 to 12 kPa is set within the vacuum evaporator (40).

3. The method according to any one of the preceding claims,
**characterized in that**
an organic acid, in particular citric acid and/or oxalic acid, and/or mineral acid, in particular sulfuric acid, is admixed to the sanitary wastewater (15) in trains and/or to the partially purified wastewater (24).

4. The method according to any one of the preceding claims,
**characterized in that**
the pH value of the at least partially purified wastewater (24) is monitored and set to a pH value of < 5, in particular to a pH value of 4.5 by adding acid.

5. The method according to claim 4,
**characterized in that**
the pH value of the at least partially purified wastewater (24) is monitored within the vacuum evaporator (40, 40') and is set by adding acid.

6. The method according to any one of the preceding claims,
**characterized in that**
the distillate (55) is hygienically treated in particular by UV irradiation and/or pasteurization and/or anodic oxidation.

7. A device (10) for treating sanitary wastewater (15) in trains in accordance with a method according to any one of clams 1 to 6, comprising a bioreactor (20) in which the sanitary wastewater (15) of a train can be purified at least partially,
**characterized by**
a conditioning installation (30) downstream of the bioreactor (20), in which the at least partially purified wastewater (24) can be separated at least partially with respect to the phases, wherein
the conditioning installation (30) comprises a vacuum evaporator (40, 40'), wherein the device has a compact structure and is integrated into a train.

8. The device (10) according to claim 7,
**characterized in that**
the conditioning installation (30) comprises a distillate container (53) which is in connection with a hygienically treating device (81) of the bioreactor (20) and/or a storage tank of a train sanitary installation.

9. The device (10) according to claim 7 or 8,
**characterized in that**
a foam trap (44) and/or a dosing apparatus (45) for a defoaming agent is formed within the vacuum evaporator (40, 40').

10. The device (10) according to any one of claims 7 to 9,
**characterized in that**
the vacuum evaporator (40') includes a scraping facility (90).

11. The device according to any one of claims 7 to 10,
**characterized in that**
the vacuum evaporator (40; 40') comprises a pH value monitoring unit and an acid addition unit.

## Revendications

1. Procédé de traitement des eaux usées sanitaires (15) à bord de trains, **caractérisé par** les étapes consistant à :
a) épurer les eaux usées sanitaires (15) dans un bioréacteur (20),
b) introduire les eaux usées (24), au moins partiellement épurées dans le bioréacteur (20), dans une installation de conditionnement (30),
c) séparer au moins partiellement les phases des eaux usées (24) partiellement épurées dans l'installation de conditionnement (30),
d) récupérer une proportion liquide et une proportion solide des eaux usées (24) au moins partiellement épurées,
dans lequel
l'installation de conditionnement comprend un évaporateur sous vide (40) et dans l'étape c) les eaux usées (24) partiellement épurées sont concentrées, et l'évaporateur sous vide (40) fonctionne à une température de 25 °C - 35 °C,
la chaleur perdue du bioréacteur (20) est fournie à l'évaporateur sous vide (40), et les eaux usées (24) partiellement épurées sont chauffées au moyen de la chaleur perdue du bioréacteur (20),
à l'étape d), un distillat (55) et un concentré (75) des eaux usées (24) au moins partiellement épurées sont obtenus, et
le distillat (55) est transporté vers une installation sanitaire à bord de trains et est utilisé comme eau de service, en particulier comme liquide de rinçage.

2. Procédé selon la revendication précédente,
**caractérisé en ce que**
un vide de 4 à 12 kPa est établi dans l'évaporateur sous vide (40).

3. Procédé selon l'une des revendications précédentes,
**caractérisé en ce que**
de l'acide organique, en particulier de l'acide citrique et/ou de l'acide oxalique, et/ou de l'acide minéral, en particulier de l'acide sulfurique, est ajouté aux eaux usées sanitaires (15) à bord de trains et/ou aux eaux usées (24) partiellement épurées.

4. Procédé selon l'une des revendications précédentes,
**caractérisé en ce que**
le pH des eaux usées (24) au moins partiellement épurées est surveillé et est ajusté à un pH < 5, en particulier à un pH de 4,5, par ajout d'acide.

5. Procédé selon la revendication 4,
**caractérisé en ce que**
le pH des eaux usées (24) au moins partiellement épurées dans l'évaporateur sous vide (40, 40') est surveillé et ajusté par ajout d'acide.

6. Procédé selon l'une des revendications précédentes,
**caractérisé en ce que**
le distillat (55) est hygiénisé, en particulier par irradiation UV et/ou par pasteurisation et/ou par oxydation anodique.

7. Dispositif (10) de traitement des eaux usées sanitaires (15) à bord de trains conformément à un procédé selon l'une des revendications 1 à 6, comprenant un bioréacteur (20) dans lequel les eaux usées sanitaires (15) d'un train peuvent au moins partiellement être épurées,
**caractérisé par**
une installation de conditionnement (30) disposée en aval du bioréacteur (20), dans laquelle les eaux usées (24) au moins partiellement épurées sont au moins partiellement séparables par rapport aux phases, l'installation de conditionnement (30) comprenant un évaporateur sous vide (40, 40'), le dispositif présentant une structure compacte et étant intégré dans un train.

8. Dispositif (10) selon la revendication 7,
**caractérisé en ce que**
l'installation de conditionnement (30) comprend un réservoir de distillat (53) relié à un moyen d'hygiénisation (81) du bioréacteur (20) et/ou à un réservoir de stockage d'une installation sanitaire à bord de trains.

9. Dispositif (10) selon la revendication 7 ou 8,
**caractérisé en ce que**
un piège à mousse (44) et/ou un dispositif de dosage (45) pour un agent anti-mousse est réalisé dans l'évaporateur sous vide (40, 40').

10. Dispositif (10) selon l'une des revendications 7 à 9,
**caractérisé en ce que**
l'évaporateur sous vide (40) comprend un mécanisme à grattoir (90).

11. Dispositif selon l'une des revendications 7 à 10,
**caractérisé en ce que**
l'évaporateur sous vide (40, 40') comprend une unité de surveillance du pH et une unité d'ajout d'acide.
